# EUROPÄISCHE PATENTANMELDUNG

(11) **EP 1 162 398 A2**
(43) Veröffentlichungstag der Anmeldung: **12.12.2001**
(21) Anmeldenummer: 01113115.8
(22) Anmeldetag: 29.05.2001
(51) Int. Cl.: F16L 21/035

(54) **Dichtungsanordnung für Steckverbinder**

(30) Priorität: 30.05.2000 DE 10026748
(71) Anmelder: WOCO Franz-Josef Wolf & Co., 63628 Bad Soden-Salmünster (DE)
(72) Erfinder: Jost, Jean-Marie, 57660 Lixing les St. Arnold (FR)
(74) Vertreter: Weber-Bruls, Dorothée, Dr.

(57) **Zusammenfassung**

Die Erfindung betrifft eine Dichtung zur Abdichtung eines Steckrohrs in einem Anschlußstutzen, mit zumindest einem Vorsprung zum Eingreifen in eine entsprechende, komplementäre Ausnehmung in dem Anschlußstutzen, nämlich zumindest einem ersten, im wesentlichen rippenartigen Vorsprung, der sich von der Außenseite der Dichtung abhebend im wesentlichen parallel zu der Längsachse der Dichtung über einen Teil der Länge der Dichtung erstreckt, und zumindest einem zweiten, im wesentlichen noppenartigen Vorsprung; sowie eine Dichtungsanordnung mit einem Anschlußstutzen, einem Steckrohr und einer solchen Dichtung.

## Beschreibung

Die Erfindung betrifft eine Dichtung zur Abdichtung eines Steckrohrs in einem Anschlußstutzen, mit zumindest einem Vorsprung zum Eingreifen in eine entsprechende, komplementäre Ausnehmung in dem Anschlußstutzen; sowie eine diese Dichtung verwendende Dichtungsanordnung.

Eine gattungsgemäße Dichtung für eine Steckverbindung ist, beispielsweise, aus der DE 198 48 213 A1 bekannt, wobei die dort offenbarte gummielastische Dichtung an ihrem Außendurchmesser eine nach außen weisende Ringlippe aufweist, die mit dem Innendurchmesser einer Bohrung eines als Anschlußstutzen fungierenden Gehäuses unter Vorspannung steht, während mindestens eine weitere, radial nach innen weisende ringförmige Dichtlippe am Innendurchmesser der Dichtung unter Vorspannung mit dem Außendurchmesser des Einsteckrohrs anliegt. Die bekannte Dichtung ist, beispielsweise, für eine Rohrverbindung in einem Turbolader eines Kraftfahrzeuges nicht zufriedenstellend einsetzbar, da einerseits Turbolader schnell laufen und somit hochfrequente Schwingungen induzieren können und andererseits aufgrund von Drehzahländerung Torsionskräfte im Bereich eines Turboladers auftreten können, so daß die Schwingungen und/oder Torsionskräfte zu einem Verdrehen der Komponenten der Rohrverbindung zueinander aufgrund der Rotationssymmetrie und mangelnden Rutschfestigkeit der Dichtung führen können.

Aufgabe der vorliegenden Erfindung ist es daher, die gattungsgemäße Dichtung derart weiterzuentwickeln, daß die Nachteile des Stands der Technik überwunden werden, insbesondere die Rutschfestigkeit gesteigert wird.

Diese Aufgabe wird erfindungsgemäß gelöst durch zumindest einen ersten, im wesentlichen rippenartigen Vorsprung, der sich von der Außenseite der Dichtung abhebend im wesentlichen parallel zu der Längsachse der Dichtung über einen Teil der Länge der Dichtung erstreckt, und zumindest einen zweiten, im wesentlichen noppenartigen Vorsprung.

Bevorzugte Ausführungsformen der Erfindung sind dabei dadurch gekennzeichnet, daß der zumindest eine erste Vorsprung einen im wesentlichen rechteckigen Querschnitt aufweist, vorzugsweise im wesentlichen stabförmig ist, und der zumindest eine zweite Vorsprung einen im wesentlichen kreisförmigen Querschnitt aufweist, vorzugsweise im wesentlichen zylinderförmig ist.

Ferner kann erfindungsgemäß vorgesehen sein, daß der zumindest eine zweite Vorsprung entlang der Längserstreckung eines ersten Vorsprungs angeordnet ist, wobei vorzugsweise jeweils ein erster Vorsprung und ein zweiter Vorsprung in einem ausgebildet sind.

Mit der Erfindung werden auch Weiterentwicklungen vorgeschlagen, die gekennzeichnet sind durch eine Vielzahl von ersten und zweiten Vorsprüngen, die insbesondere längs des Umfangs der Dichtung gleichmäßig verteilt sind, wobei die Anzahl an zweiten Vorsprüngen vorzugsweise halb so groß wie die Anzahl an ersten Vorsprüngen und ein zweiter Vorsprung benachbart zu jedem zweiten ersten Vorsprung angeordnet ist.

Auch können erfindungsgemäße Dichtungen eine erste Lippe, vorzugsweise in Form einer Ringlippe, an einem ersten Ende der Dichtung zum zumindest teilweise Umgreifen des Anschlußstutzens aufweisen.

Dabei kann vorgesehen sein, daß sich jeder erste Vorsprung von der ersten Lippe, die erste Lippe vorzugsweise berührend, in Richtung des zweiten Endes der Dichtung ausbreitet.

Weitere Ausführungsformen der erfindungsgemäßen Dichtung sind gekennzeichnet durch eine zweite Lippe, vorzugsweise in Form einer Ringlippe, an dem zweiten Ende der Dichtung zum Abstützen des Steckrohrs.

Mit der Erfindung wird auch vorgeschlagen, daß die Dichtung aus einem gummielastischen Material hergestellt ist.

Erfindungsgemäß wird weiterhin eine Dichtungsanordnung mit einem Anschlußstutzen, einem Steckrohr und einer erfindungsgemäßen Dichtung vorgeschlagen, bei der der zumindest eine erste Vorsprung und/oder der zumindest eine zweite Vorsprung von der Außenseite der Dichtung in einer Höhe hervorsteht bzw. hervorstehen, die zumindest gleich groß der Wandstärke des Anschlußstutzens im Bereich der zu dem Vorsprung bzw. zu den Vorsprüngen komplementären Ausnehmung bzw. Ausnehmungen ist.

Dabei kann vorgesehen sein, daß die Dichtung über eine Muffe, wie eine verschraubbare Muffe, Gummimuffe oder dergleichen, zwischen dem Anschlußstutzen und dem Einsteckrohr fixierbar ist.

Schließlich kann die erfindungsgemäße Dichtungsanordnung zur Abdichtung einer Rohrverbindung in bzw. zu einem Turbolader in einem Kraftfahrzeug oder in einem Küchengerät, insbesondere in einer Kaffeemaschine, Teemaschine, Spülmaschine oder dergleichen verwendet werden.

Der Erfindung liegt somit die überraschende Erkenntnis zugrunde, unterschiedlich ausgestaltete Vorsprünge auf dem Außendurchmesser einer Dichtung vorzusehen, die insbesondere keine Rotationssymmetrie aufweisen und daher beispielsweise in Turboladerrohrverbindungen einsetzbar sind.

Weitere Merkmale und Vorteile der Erfindung ergeben sich aus der nachfolgenden Beschreibung, in der ein Ausführungsbeispiel der Erfindung anhand von schematischen Zeichnungen im einzeln erläutert ist. Dabei zeigt:
- Figur 1: eine erfindungsgemäße Dichtung in perspektivischer Ansicht;
- Figur 2: die Dichtung von Figur 1 im Seitenschnitt; und
- Figur 3: die Dichtung von Figur 1 bzw. 2 im Querschnitt.

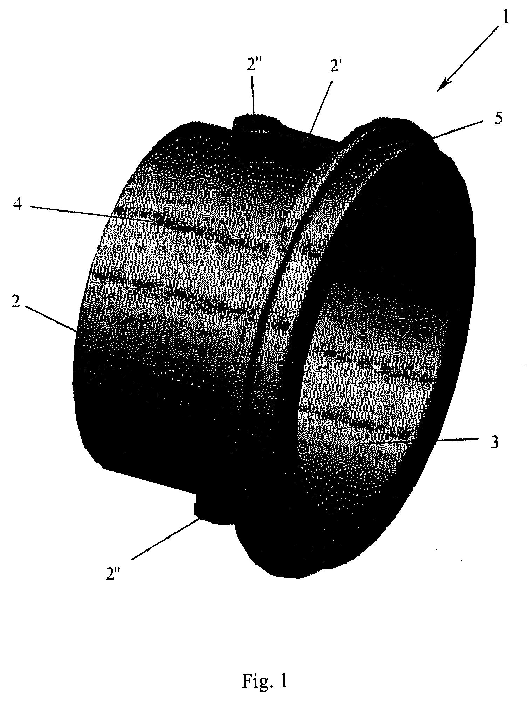

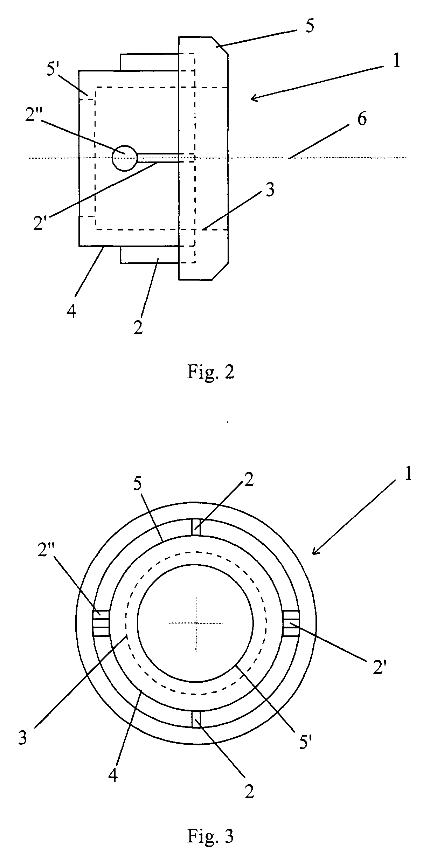

Wie den Figuren 1 bis 3 zu entnehmen ist, umfaßt eine erfindungsgemäße gummielastische Dichtung 1 vier erste Vorsprünge 2, 2' und zwei zweite Vorsprünge 2" für eine rutschfeste Verbindung eines nicht gezeigten, an die Innenseite 3 der Dichtung 1 angreifenden Steckrohrs mit einem nicht gezeigten, an die Außenseite 4 der Dichtung 1 angreifenden Anschlußstutzen. Ferner weist die erfindungsgemäße Dichtung 1 zwei ringförmige Lippen 5, 5' auf, von denen die eine Lippe 5 an einem ersten Ende der Dichtung 1 den Anschlußstutzen teilweise umgreift und die andere Lippe 5' an dem zweiten Ende der Dichtung 1 das Steckrohr abstützt.

Die vier ersten Vorsprünge 2, 2' erstrecken sich jeweils längs der Längsachse 6 der Dichtung 1 von der einen Lippe 5 am ersten Ende in Richtung des zweiten Endes der Dichtung 1, um den Umfang der Dichtung 1 gleichmäßig verteilt, und sind im wesentlichen stabförmig; und die zwei zweiten Vorsprünge 2" sind im wesentlichen zylinderförmig sowie in einem mit jedem zweiten ersten Vorsprung 2' ausgebildet.

Der Anschlußstutzen weist zu den Vorsprüngen 2, 2', 2" komplementäre Ausnehmungen auf, wobei sich die Vorsprünge 2, 2', 2" in einer Dichtungsanordnung aus dem Anschlußstutzen, dem Einsteckrohr und der Dichtung 1 selbst aus dem Anschlußstutzen nach außen herausragen und von einer nicht gezeigten Muffe zur Fixierung der Dichtungsanordnung komprimierbar sind.

Die unterschiedliche Ausgestaltung der Vorsprünge 2, 2', 2" und ihre Anordnung längs der Längsachse 6 der Dichtung 1 sorgen unter anderem für eine rutschfeste Sicherung des Anschlußstutzens auf der Dichtung, so daß die erfindungsgemäße Dichtung insbesondere für eine Rohrverbindung eines Turboladers oder einer anderen Vorrichtung, bei der die Schwingungen und/oder Torsionskräfte an die Dichtungsanordnung angelegt werden, geeignet ist.

Die in der vorstehenden Beschreibung, in den Zeichnungen sowie den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Dichtung zur Abdichtung eines Steckrohrs in einem Anschlußstutzen, mit zumindest einem Vorsprung zum Eingreifen in eine entsprechende, komplementäre Ausnehmung in dem Anschlußstutzen, **gekennzeichnet durch**
zumindest einen ersten, im wesentlichen rippenartigen Vorsprung (2, 2'), der sich von der Außenseite (3) der Dichtung (1) abhebend im wesentlichen parallel zu der Längsachse (6) der Dichtung (1) über einen Teil der Länge der Dichtung (1) erstreckt, und zumindest einen zweiten, im wesentlichen noppenartigen Vorsprung (2").

2. Dichtung nach Anspruch 1, **dadurch gekennzeichnet, daß**
der zumindest eine erste Vorsprung (2, 2') einen im wesentlichen rechteckigen Querschnitt aufweist, vorzugsweise im wesentlichen stabförmig ist, und der zumindest eine zweite Vorsprung (2") einen im wesentlichen kreisförmigen Querschnitt aufweist, vorzugsweise im wesentlichen zylinderförmig ist.

3. Dichtung nach Anspruch 1 oder 2, **dadurch gekennzeichnet, daß**
der zumindest eine zweite Vorsprung (2") entlang der Längserstreckung eines ersten Vorsprungs (2') angeordnet ist, wobei vorzugsweise jeweils ein erster Vorsprung (2') und ein zweiter Vorsprung (2") in einem ausgebildet sind.

4. Dichtung nach einem der vorangehenden Ansprüche, **gekennzeichnet durch**
eine Vielzahl von ersten und zweiten Vorsprüngen (2, 2', 2"), die insbesondere längs des Umfangs der Dichtung (1) gleichmäßig verteilt sind, wobei die Anzahl an zweiten Vorsprüngen (2") vorzugsweise halb so groß wie die Anzahl an ersten Vorsprüngen (2, 2') und ein zweiter Vorsprung (2") benachbart zu jedem zweiten ersten Vorsprung (2') angeordnet ist.

5. Dichtung nach einem der vorangehenden Ansprüche, **gekennzeichnet durch**
eine erste Lippe (5), vorzugsweise in Form einer Ringlippe, an einem ersten Ende der Dichtung (1) zum zumindest teilweise Umgreifen des Anschlußstutzens.

6. Dichtung nach Anspruch 5, **dadurch gekennzeichnet, daß**
sich jeder erste Vorsprung (2, 2') von der ersten Lippe (5), die erste Lippe (5) vorzugsweise berührend, in Richtung des zweiten Endes der Dichtung (1) ausbreitet.

7. Dichtung nach einem der vorangehenden Ansprüche, **gekennzeichnet durch**
eine zweite Lippe (5'), vorzugsweise in Form einer Ringlippe, an dem zweiten Ende der Dichtung (1) zum Abstützen des Steckrohrs.

8. Dichtung nach einem der vorangehenden Ansprüche, **dadurch gekennzeichnet, daß**
die Dichtung (1) aus einem gummielastischen Material hergestellt ist.

9. Dichtungsanordnung mit einem Anschlußstutzen, einem Steckrohr und einer Dichtung nach einem der vorangehenden Ansprüche, **dadurch gekennzeichnet, daß**
der zumindest eine erste Vorsprung (2, 2') und/oder der zumindest eine zweite Vorsprung (2, 2") von der Außenseite (4) der Dichtung (1) in einer Höhe hervorsteht bzw. hervorstehen, die zumindest gleich groß der Wandstärke des Anschlußstutzens im Bereich der zu dem Vorsprung bzw. zu den Vorsprüngen (2, 2', 2") komplementären Ausnehmung bzw. Ausnehmungen ist.

10. Dichtungsanordnung nach Anspruch 9, **dadurch gekennzeichnet, daß**
die Dichtung (1) über eine Muffe, wie eine verschraubbare Muffe, Gummimuffe oder dergleichen, zwischen dem Anschlußstutzen und dem Einsteckrohr fixierbar ist.

11. Dichtungsanordnung nach Anspruch 9 oder 10 zur Abdichtung einer Rohrverbindung in bzw. zu einem Turbolader in einem Kraftfahrzeug oder in einem Küchengerät, insbesondere in einer Kaffeemaschine, Teemaschine, Spülmaschine oder dergleichen.
